# FASCICULE DE BREVET EUROPEEN

(11) **EP 2 320 603 B1**
(45) Date de publication et mention de la délivrance du brevet: **25.02.2015**
(21) Numéro de dépôt: 10189966.4
(22) Date de dépôt: 04.11.2010
(51) Int. Cl.: H04L 12/28, H04L 29/06, H04L 12/40, H04L 12/46

(54) **Système de communication dans un aéronef**
KOMMUNIKATIONSSYSTEM IN EINEM FLUGZEUG
Communication sytem in an aircraft

(30) Priorité: 05.11.2009 FR 0957822
(43) Date de publication de la demande: 11.05.2011
(73) Titulaire: Airbus Operations (Société par actions simplifiée), 31060 Toulouse (FR)
(72) Inventeur: Mann, Olivier, 44400, Reze (FR); Lopez, Juan, 31330, Grenade (FR); Berthe, Benoît, 31520, Ramonville Saint Agne (FR)
(74) Mandataire: Augarde, Eric

(56) Documents cités:
- WO-A1-2007/132107
- ALENA R L ET AL: "Communications for Integrated Modular Avionics", AEROSPACE CONFERENCE, 2007 IEEE, IEEE, PISCATAWAY, NJ, USA, 3 mars 2007 (2007-03-03), pages 1-18, XP031214239, ISBN: 978-1-4244-0524-4

## Description

### DOMAINE TECHNIQUE

La présente invention concerne de manière générale les systèmes de communication dans un aéronef.

### ÉTAT DE LA TECHNIQUE ANTÉRIEURE

Dans le passé, les équipements dans un aéronef utilisaient une communication de type point à point avec des liaisons physiques directes entre équipements. Par exemple, un calculateur pouvait être connecté via des liaisons individuelles avec une pluralité d'autres calculateurs et/ou contrôleurs.

Ce type de communication peut être acceptable pour un nombre d'équipements relativement faible. Mais avec l'accroissement de la complexité des systèmes aéronautiques, une telle communication point à point nécessiterait un nombre de liaisons directes très élevé.

Afin de résoudre ce problème, on utilise actuellement un système de communication comportant un réseau destiné à servir de support aux communications entre les différents équipements numériques de l'avion.

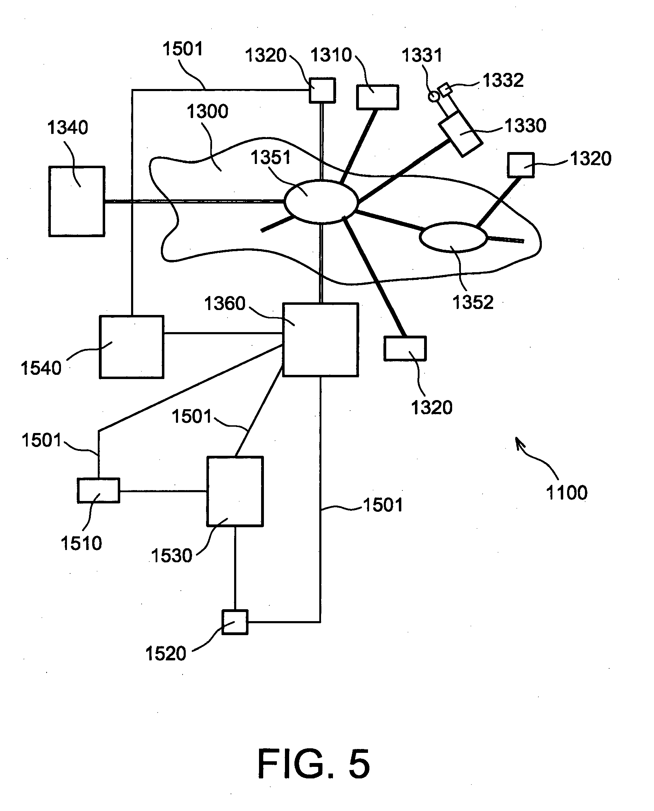

La Fig. 5 représente une architecture connue d'un système de communication 1100 permettant à une pluralité d'équipements 1310, 1320, 1330, 1340, 1360 d'émettre et/ou de recevoir des données via un réseau 1300 de type AFDX (*Avionics Full Duplex Switched Ethernet*). Ces équipements peuvent comprendre des contrôleurs 1310, des calculateurs 1320, un terminal de supervision 1360, et éventuellement des concentrateurs de données 1330 réalisant les interfaces entre le réseau AFDX 1300 et des liaisons analogiques avec des capteurs 1331 et/ou actionneurs 1332.

On rappelle que le réseau AFDX, développé pour les besoins de l'aéronautique est basé sur un réseau Ethernet commuté. Dans un réseau Ethernet commuté, chaque terminal, source ou destinataire, est relié individuellement à un commutateur de trames 1351, 1352 et les commutateurs sont reliés entre eux par des liaisons physiques. Le réseau AFDX fait appel à la notion de lien virtuel défini comme un chemin orienté de niveau 2 à travers le réseau 1300, issu d'un terminal source et desservant un destinataire ou une pluralité de destinataires. Un terminal destinataire d'un lien virtuel est dit abonné à ce lien.

Le réseau AFDX a fait l'objet d'une standardisation dans la norme Arinc 664, partie 7. On trouvera notamment une description du réseau AFDX dans le document intitulé « AFDX protocol tutorial » disponible sous l'URL :
http://sierrasales.com/pdfs/AFDXTutorial.pdf ainsi qu'une présentation des liens virtuels dans FR-A-2832011 déposée au nom de la présente demanderesse. Un autre example se trouve dans WO 2007/132107. On rappellera simplement ici que le réseau AFDX est full-duplex et déterministe.

Par full-duplex, on entend que chaque terminal peut simultanément émettre et recevoir des trames sur des liens virtuels sur le même lien physique. Le réseau AFDX est déterministe, au sens où les liens virtuels ont des caractéristiques garanties en termes de borne de latence, de ségrégation physique de flux, de bande passante et de débit. Chaque lien virtuel dispose pour ce faire d' un chemin réservé de bout en bout à travers le réseau. Les données sont transmises sous forme de paquets IP encapsulés dans des trames Ethernet. A la différence de la commutation Ethernet classique (utilisant l'adresse Ethernet du destinataire), la commutation de trames sur un réseau AFDX utilise un identificateur de lien virtuel inclus dans l'entête de trame. Lorsqu'un commutateur 1351 reçoit sur l'un de ses ports d'entrée une trame, il lit l'identificateur de lien virtuel et détermine à partir de sa table de commutation le ou les ports de sortie sur lesquels elle doit être transmise. Les commutateurs 1351, 1352 vérifient au vol l'intégrité des trames transmises sans toutefois demander une retransmission si une trame est erronée : les trames détectées comme erronées sont éliminées. Les trames transitant sur un lien virtuel sont numérotées en séquence. A la réception, le terminal destinataire vérifie l'intégrité de la séquence des trames.

Toutefois, les besoins de l'aéronautique sont dictés par des contraintes particulièrement sévères de fiabilité et de redondance. En particulier, il est indispensable d'assurer la disponibilité en toutes circonstances de certains types de données, considérées comme critiques pour le pilotage de l'avion. De ce fait l'architecture de connexion illustrée en Fig. 5 montre que pour des besoins extrêmes de sécurité, de nombreuses liaisons directes 1501 sont maintenues avec des équipements de secours 1510, 1520, 1530, 1540 en parallèle et de manière indépendante du réseau AFDX.

Cette architecture nécessite de nombreuses connexions filaires et de plus, présente l'inconvénient d'être hétérogène et désordonnée et par conséquent difficile à mettre en oeuvre.

Un autre système de communication connu prévoit d'interconnecter les équipements de secours au moyen d'un bus ou d'un deuxième réseau.

Toutefois, dans celui-ci existent aussi des liaisons de type point à point pour des données communes entre les équipements des deux réseaux. Par exemple, pour des données de maintenance ou des mises à jour de logiciel, de nombreuses liaisons individuelles sont maintenues entre les équipements de secours et le terminal de supervision 1360 relié au réseau AFDX.

Ceci nécessite toujours de nombreuses et longues connexions filaires, ce qui est préjudiciable au bilan de masse de l'appareil.

L'objet de la présente invention est par conséquent de proposer un système de communication présentant une architecture qui permet de connecter un grand nombre d'équipements principaux et de secours de manière simple et sécurisée et qui peut répondre à une panne générique sans présenter les inconvénients précités.

### EXPOSÉ DE L'INVENTION

La présente invention est définie par un système de communication dans un aéronef comportant :
- un réseau primaire de type AFDX destiné à connecter une pluralité d'équipements primaires, lesdits équipements primaires étant physiquement reliés à un dispositif de commutation du réseau primaire qui permet la communication entre tous ces équipements primaires par des liens virtuels,
- un réseau secondaire dissemblable dudit réseau primaire tout en ayant le même protocole au niveau trame, ledit réseau secondaire étant destiné à connecter une pluralité d'équipements secondaires, lesdits équipements secondaires étant physiquement reliés à un dispositif de répétition du réseau secondaire qui permet la communication entre tous ces équipements secondaires, et
- une passerelle d'interconnexion entre lesdits réseaux primaire et secondaire, destinée à recopier bit-à-bit des trames d'informations communes en provenance de l'un desdits réseaux primaire et secondaire pour les diffuser à travers l'autre desdits réseaux primaire et secondaire afin de faire partager ces informations communes aux deux réseaux.

Avantageusement, la passerelle d'interconnexion comporte :
- une première interface destinée à être reliée au réseau primaire et comprenant des premiers buffers d'entrée et de sortie,
- une seconde interface destinée à être reliée au réseau secondaire et comprenant des seconds buffers d'entrée et de sortie,
- des moyens de mémoire pour stocker une table de configuration d'une liste prédéterminée des identificateurs des liens virtuels correspondant aux informations communes, et
- des moyens de sélection pour sélectionner et recopier les trames correspondant aux informations communes en fonction des identificateurs de liens virtuels choisis dans la table de configuration.

Selon un mode particulier de réalisation de la passerelle d'interconnexion, les moyens de mémoire et les moyens de sélection sont compris dans la première interface et/ou la seconde interface et en ce que les première et seconde interfaces sont connectées entre elles via un bus de connexion.

Selon un autre mode particulier de l'invention, la passerelle d'interconnexion est une partition au sein d'un calculateur appartenant auxdits équipements primaires, ledit calculateur comportant des moyens de stockage correspondant auxdits moyens de mémoire, et un processeur correspondant auxdits moyens de sélection.

Selon une variante, la passerelle d'interconnexion est une partition au sein d'un calculateur secondaire appartenant auxdits équipements secondaires, ledit calculateur comportant des moyens de stockage correspondant auxdits moyens de mémoire, et un processeur correspondant auxdits moyens de sélection.

Avantageusement, la passerelle d'interconnexion est reliée au réseau primaire et/ou au réseau secondaire via une liaison en fibre optique.

Le réseau primaire est un réseau AFDX et le réseau secondaire est un réseau EREBUS.

Avantageusement, le réseau EREBUS fait appel à des liens virtuels, chaque équipement secondaire en recevant depuis le dispositif de répétition des trames d'informations comportant dans leurs entêtes des identificateurs de liens virtuels, ne prend en considération que celles appartenant à des liens virtuels auxquels il est abonné.

Selon une variante, le réseau EREBUS fait appel à des trames d'information comportant dans leurs entêtes des labels qui permettent de connaître la nature de l'information de chaque trame, chaque équipement secondaire en recevant depuis le dispositif de répétition des trames d'informations comportant des labels, ne prend en considération que celles contenant des informations qui l'intéressent.

Les informations communes aux deux réseaux peuvent comporter : des données de maintenance, des données horaires, des mises à jour de logiciels et des données opérationnelles.

L'invention concerne enfin un aéronef, comprenant un système de communication tel que défini ci-dessus.

### BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :
La Fig. 1 illustre schématiquement un système de communication dans un aéronef selon l'invention ;
La Fig. 2 représente schématiquement l'architecture d'une passerelle d'interconnexion pouvant être avantageusement utilisée dans le système de la Fig. 1 ;
Les Figs. 3A et 3B représentent schématiquement différentes variantes de la passerelle d'interconnexion de la Fig. 2 ;
La Fig. 4 représente un autre mode de réalisation de la passerelle d'interconnexion de la Fig. 2 ; et
La Fig. 5 illustre schématiquement l'architecture d'un système de communication d'aéronef connu de l'état de la technique.

### EXPOSÉ DÉTAILLÉ DE MODES DE RÉALISATION PARTICULIERS

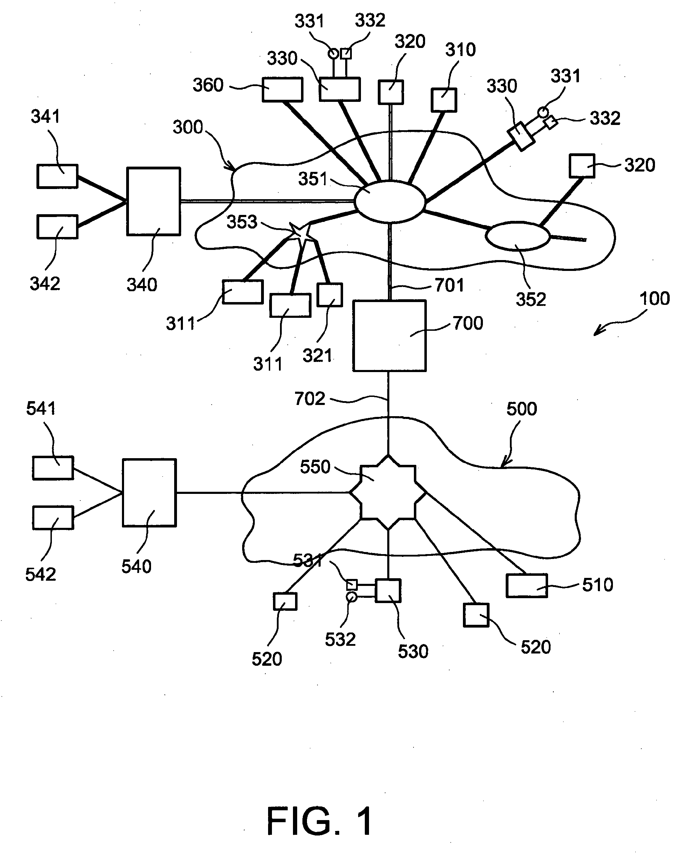

La Fig. 1 représente de manière schématique l'architecture d'un système de communication 100 dans un aéronef selon un mode de réalisation de l'invention. Le système de communication est en général associé à des systèmes de commande élémentaires prenant en charge des fonctions particulières de l'aéronef.

Conformément à l'invention, le système de communication 100 comprend un réseau primaire 300 de type AFDX et un réseau secondaire 500. Le réseau primaire 300 est destiné à connecter une pluralité d'équipements primaires 310, 311, 320, 321, 330, 340, 360 et le réseau secondaire 500 est destiné à connecter une pluralité d'équipements secondaires 510, 520, 530, 540.

Avantageusement, le réseau secondaire 500 est choisi dissemblable du réseau primaire 300 pour se prémunir d'une panne générique (ou mode commun) due au réseau primaire 300 tout en ayant le même protocole au niveau trame que ce dernier afin de simplifier les échanges de données entre les deux réseaux 300 et 500.

Les équipements primaires 310, 311, 320, 321, 330, 340, 360 sont des terminaux sources et/ou destinataires abonnés au réseau primaire 300 et sont physiquement reliés à un dispositif de commutation 351, 352, 353 du réseau primaire 300 qui permet la communication entre tous ces équipements par des liens virtuels.

D'une manière générale, le réseau primaire 300 peut comprendre une pluralité de commutateurs de trames 351 et 352 disposés en des noeuds de communication de l'aéronef et éventuellement une pluralité de micro-commutateurs 353 (dont un seul est ici représenté). Le micro-commutateur 353 permet de traiter localement les trames en provenance ou à destination d'une grappe de terminaux 311, 321 abonnés au réseau primaire 300. Plus précisément, le micro-commutateur 353 possède un premier port relié au commutateur 351 et une pluralité de seconds ports reliés aux différents équipements 311, 321 abonnés au réseau 300. Sur la liaison descendante, c'est-à-dire pour des trames reçues par le premier port à destination d'un abonné, le micro-commutateur 353 joue le rôle de répéteur (hub), c'est-à-dire qu'une trame incidente sur le premier port est répliquée sur tous les seconds ports. En revanche sur la liaison montante, c'est-à-dire pour des trames émises par les différents terminaux abonnés 311, 321, le micro-commutateur 353 scrute tour à tour les seconds ports et vide leurs tampons respectifs sur le premier port, selon un mécanisme de type « round robin ».

Dans l'exemple illustré, le dispositif de commutation du réseau primaire 300 comprend deux commutateurs de trames 351 et 352 et un micro-commutateur 353 relié au commutateur 351. Dans un but de simplification, seuls des équipements connectés au commutateur de trames 351 et au micro-commutateur 353 ont été représentés. Ces équipements comprennent par exemple, des contrôleurs 310, 311, des calculateurs 320, 321, une interface homme-machine 340 reliée à des moyens d'affichages 341 et de pilotage 342, un terminal de configuration ou de supervision 360, et éventuellement des concentrateurs de données 330 réalisant les interfaces entre le réseau AFDX 300 et des liaisons analogiques avec des capteurs 331 et/ou actionneurs 332.

Par exemple, un capteur 331 peut fournir des mesures sous forme analogique au concentrateur de données 330 correspondant et ce dernier les formate sous forme de messages AFDX pour les envoyer au calculateur dédié 320 via le commutateur 351. De même, le calculateur 320 peut transmettre une consigne à une unité de contrôle (non représentée) d'un actionneur 332 par l'intermédiaire du concentrateur de données 330 via aussi le réseau AFDX. Bien entendu, les capteurs 331 et/ou actionneurs peuvent aussi être reliés analogiquement de manière directe à leur calculateur et/ou contrôleur dédié.

Le contrôleur 310 peut aussi transmettre des données à un calculateur 320 via le commutateur de trames 351. De même, le calculateur 320 peut échanger des messages avec un concentrateur de données 330, une interface homme-machine 340, ou le terminal de supervision 360 via aussi le commutateur de trames 351.

Par ailleurs, les équipements secondaires 510, 520, 530, 540 sont des terminaux sources et/ou destinataires abonnés au réseau secondaire 500 et sont physiquement reliés entre eux par au moins un dispositif de répétition ou répéteur 550 du réseau secondaire 500. Ce ou ces répéteur(s) permet(tent) la communication entre tous les équipements secondaires 510, 520, 530, 540.

L'exemple de la figure 1 montre que les équipements secondaires comprennent un contrôleur secondaire 510, un calculateur secondaire 520, une interface homme-machine secondaire 540 reliée à des moyens d'affichage 541 et de pilotage 542 secondaires, et éventuellement un concentrateur de données secondaire 530 réalisant les interfaces entre le réseau secondaire 500 et des liaisons analogiques avec des capteurs 531 et/ou actionneurs 532 secondaires. Tous les équipements secondaires 510, 520, 530, 540 sont connectés au répéteur 550 du réseau secondaire 500.

Le répéteur 550 possède une pluralité de ports identiques reliés aux différents équipements (ou terminaux) secondaires 510, 520, 530, 540 abonnés au réseau secondaire 500. Dans l'exemple illustré, un premier port est relié au contrôleur secondaire 510, des deuxième et troisième ports sont reliés à des premier et second calculateurs secondaires 520, un quatrième port est relié à un concentrateur de données secondaire 530, et finalement un cinquième port est relié à l'interface homme-machine secondaire 540.

Ainsi, une trame incidente sur le répéteur 550 depuis par exemple, un calculateur secondaire 520 et à destination d'un abonné, est répliquée sur tous les ports. Les terminaux abonnés 510, 520, 530, 540 qui la reçoivent déterminent s'ils sont destinataires, l'ignorent dans la négative et la prennent en considération dans l'affirmative.

En outre, pour des trames émises par les différents terminaux abonnés 510, 520, 530, 540, le répéteur 550 scrute tour à tour les ports et vide le tampon d'entrée de chaque port sur tous les ports, selon un mécanisme de type « round robin », assurant ainsi un partage équitable de la bande passante.

La connexion entre le réseau primaire 300 et le réseau secondaire 500 est assurée par une passerelle d'interconnexion 700 qui est destinée à recopier bit-à-bit des trames d'informations communes en provenance de l'un des deux réseaux primaire 300 et secondaire 500 pour les diffuser à travers l'autre de ces deux réseaux, ce afin de faire partager ces informations communes aux deux réseaux 300 et 500.

Avantageusement, le réseau primaire 300 et la passerelle d'interconnexion 700 peuvent être reliés entre eux grâce à une liaison 701 en fibre optique permettant de découpler électriquement les deux réseaux. De même, la passerelle d'interconnexion 700 peut aussi être reliée au réseau secondaire 500 au moyen d'une liaison 702 en fibre optique.

Les informations communes aux deux réseaux 300 et 500 peuvent comporter par exemple, des données de maintenance, des données horaires, des données de configuration, des mises à jour de logiciel, et des données opérationnelles permettant d'augmenter la performance opérationnelle, comme par exemple le partage des informations issues des capteurs, ainsi qu'éventuellement d'autres types de données. Ces informations communes peuvent provenir d'un terminal (par exemple, le terminal de configuration ou de supervision 360) abonné au réseau primaire 300.

La passerelle d'interconnexion 700 selon l'invention, permet ainsi de diffuser l'information commune entre les deux réseaux de manière simple, rapide, et sécurisée.

Plus particulièrement, le réseau secondaire 500 permet ainsi de se prémunir d'une panne générique dans le réseau primaire 300 tout en formant avec ce dernier un unique réseau transparent aux flux de données communes grâce à la passerelle d'interconnexion 700. On appréciera que l'invention ne nécessite pas des liaisons directes avec les équipements secondaires 510, 520, 530, 540 ainsi qu'à des passerelles coûteuses et complexes.

Toutefois, on notera que certains équipements primaires pourront éventuellement posséder une liaison avec le réseau secondaire 500 afin de couvrir une panne simple de leur commutateur 351.

Par ailleurs, pour des raisons de disponibilité, la connexion entre le réseau primaire 300 et le réseau secondaire 500 peut bien entendu être assurée par plusieurs passerelles d'interconnexion 700.

Le système de communication 100 selon l'invention permet ainsi de simplifier le câblage grâce à un seul réseau pour le service commun tout en renforçant le niveau de sûreté grâce à deux réseaux ségrégués et dissimilaires. De plus, ceci rend possible un monitoring ou une supervision étendue des communications de bout en bout du système de communication en utilisant un protocole commun à tous les équipements.

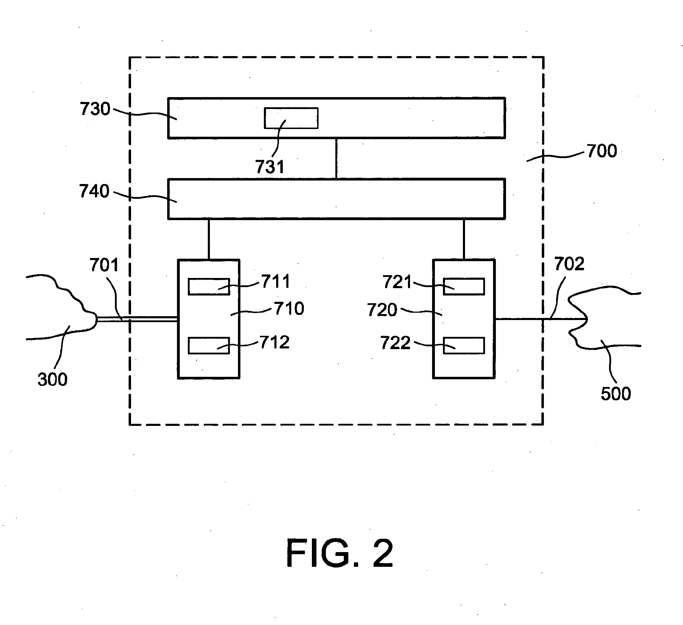

La Fig. 2 représente un exemple d'architecture d'une passerelle d'interconnexion 700 pouvant être utilisée dans le système de communication 100 d'aéronef selon l'invention.

La passerelle d'interconnexion 700 comporte une première interface 710 comprenant des premiers buffers d'entrée 711 et de sortie 712, une seconde interface 720 comprenant des seconds buffers d'entrée 721 et de sortie 722, des moyens de stockage 730, et des moyens de sélection 740.

La première interface 710 est destinée à être reliée via la liaison 701 (par exemple, en fibre optique) au commutateur de trames 351 du réseau primaire 300 et la seconde interface 720 est destinée à être reliée via la liaison 702 (par exemple, en fibre optique) au répéteur 550 du réseau secondaire 500 (voir Fig. 1).

Les moyens de stockage 730 permettent de stocker une table de configuration 731 d'une liste prédéterminée des identificateurs des liens virtuels correspondant aux informations communes.

En effet, chaque trame comporte dans son entête un identificateur de lien virtuel qui permet d'identifier le chemin orienté emprunté par cette trame. Ainsi, la table de configuration 731 permet à la passerelle d'interconnexion 700 de recopier les trames dont les identificateurs de liens virtuels sont identifiés dans cette table 731.

Plus précisément, les moyens de sélection 740 sélectionnent et recopient les trames correspondant aux informations communes aux deux réseaux 300 et 500 en fonction des identificateurs de liens virtuels qu'elles contiennent et qui sont choisis dans la table de configuration 731.

Etant donné que les réseaux primaire 300 et secondaire 500 ont les mêmes protocoles au niveau trame, il suffit à la passerelle d'interconnexion 700 de copier les données communes bit-à-bit sans conversion de protocole. Ainsi, la passerelle d'interconnexion 700 est rapide et simple à mettre en oeuvre.

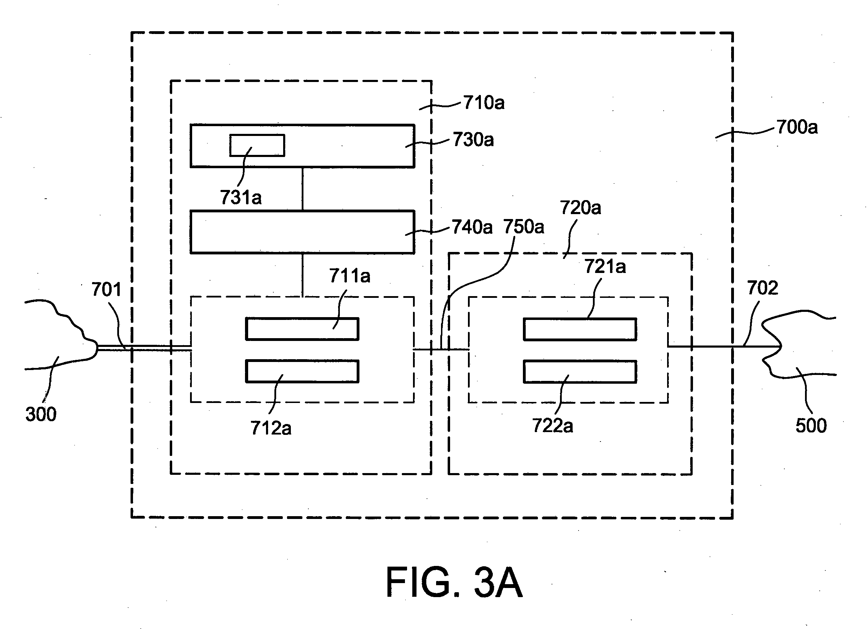

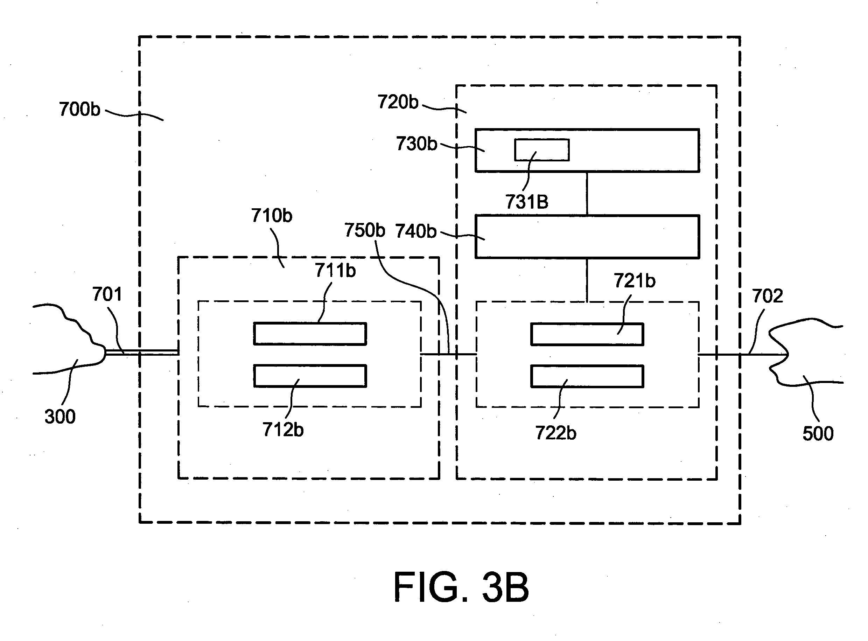

Les Figs. 3A et 3B illustrent des modes de réalisation particuliers de la passerelle d'interconnexion de la Fig. 2.

On notera que les données en provenance du réseau secondaire 500 sont principalement des données communes qui peuvent donc être directement diffusées à travers le réseau primaire 300. Par conséquent, il est avantageux de disposer les moyens de sélection 740 du côté du réseau primaire 300.

En effet, la Fig. 3A montre que la première interface 710a de la passerelle d'interconnexion 700a comprend outre les premiers buffers d'entrée 711a et de sortie 712a, une mémoire 730a (correspondant aux moyens de stockage) et un filtre 740a (correspondant aux moyens de sélection).

En revanche, la seconde interface 720a comprend seulement les seconds buffers d'entrée 721a et de sortie 722a. Les première et seconde interfaces 710a et 720a sont par ailleurs, connectées entre elles via un bus de connexion 750a.

Ainsi, pour les flux de données en provenance du réseau primaire 300 (c'est-à-dire, pour des trames reçues par la passerelle d'interconnexion 700a depuis le réseau primaire 300), les trames incidentes sont stockées dans le premier buffer d'entrée 711a de la première interface 710a. Le filtre 740a élimine les trames correspondant à un lien virtuel non reconnu (c'est-à-dire, non enregistré dans la table de configuration 731a qui est stockée dans la mémoire 730a) et par conséquent, ne laisse passer vers le second buffer de sortie 722a de la seconde interface 720a que les trames correspondant aux informations communes. Ces trames sont ensuite diffusées à travers le réseau secondaire 500.

En revanche, pour les flux de données en provenance du réseau secondaire 500 (c'est-à-dire pour les trames reçues par la passerelle d'interconnexion 700a depuis le réseau secondaire 500), les trames incidentes dans le second buffer d'entrée 721a de la seconde interface 720a sont directement renvoyées vers le premier buffer de sortie 712a de la première interface 710a pour qu'elles soient diffusées à travers le réseau primaire 300.

Eventuellement, dans le cas où les flux en provenance du réseau secondaire 500 comportent des données autre que les informations communes, le filtre 740a peut aussi se charger d'éliminer les trames correspondant à des liens virtuels non enregistrés dans la table de configuration 731a. Ainsi, le filtre 740a ne laisse passer dans un sens ou dans l'autre que les trames correspondant aux informations communes.

La Fig. 3B illustre une passerelle d'interconnexion 700b selon un autre mode de réalisation, comportant une première interface 710b comprenant les premiers buffers d'entrée 711b et de sortie 712b, et une seconde interface 720b comprenant les seconds buffers d'entrée 721b et de sortie 722b, une mémoire 730b (correspondant aux moyens de stockage) et un filtre 740b (correspondant aux moyens de sélection). De même, les première et seconde interfaces 710b et 720b sont connectées entre elles via un bus de connexion 750b.

La passerelle d'interconnexion 700b de la Fig. 3B ne diffère de celle de la Fig. 3A que par le fait que la mémoire 730b et le filtre 740b sont disposés dans la seconde interface 720b au lieu de la première interface 710b. Ainsi, la sélection des trames en provenance du réseau nominal 300 ou du réseau secondaire 500 se fait au niveau de la seconde interface 720b.

Bien entendu, il est aussi envisageable de disposer la mémoire 730b et/ou le filtre 740b à l'extérieur des interfaces 710b et 720b ou même de disposer un filtre dans chaque interface.

Ainsi, les figures 3A et 3B illustrent des exemples d'une passerelle d'interconnexion 700a, 700b autonome qui permet de connecter les deux réseaux 300 et 500 de manière simple en ne laissant passer dans un sens ou dans l'autre que les informations communes.

Selon d'autres modes de réalisation, la passerelle d'interconnexion 700 peut être comprise par exemple, dans un calculateur 320 relié au réseau primaire 300 ou même dans un calculateur secondaire 520 relié au réseau secondaire 500.

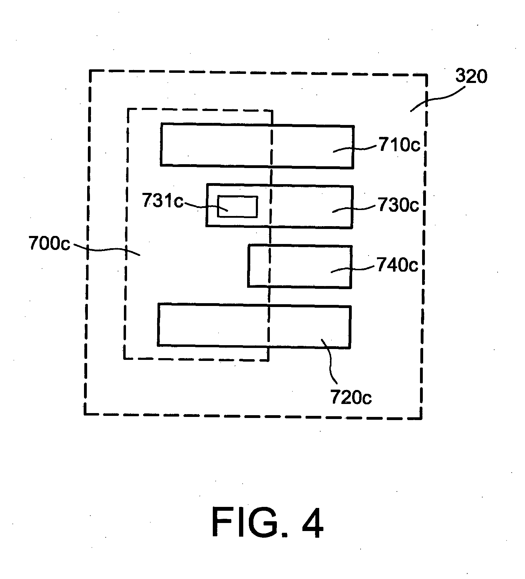

La figure 4 illustre un calculateur 320 comportant des interfaces 710c et 720c, des moyens de stockage 730c et un processeur 740c. Selon cet exemple, la passerelle d'interconnexion 700c est une partition (représentée en pointillé) au sein du calculateur 330.

Ainsi, les interfaces 710c et 720c du calculateur 330 correspondent aux première et seconde interfaces 710 et 720 de la passerelle d'interconnexion 700, tandis que les moyens de stockage 730c et le processeur 740c assurent entre autres, les fonctions respectives des moyens de mémoire 730 et de sélection 740 de la passerelle d'interconnexion 700.

La table de configuration 731c est alors stockée dans les moyens de stockage 730c du calculateur 320 et le processeur 740c se charge de ne laisser passer dans un sens ou dans l'autre que les informations communes en fonction des identificateurs de liens virtuels et de la table de configuration 731c.

Avantageusement, le calculateur peut être relié au réseau primaire 300 et/ou au réseau secondaire 500 au moyen d'une liaison en fibre optique qui permet de découpler électriquement les deux réseaux.

Le calculateur 320, recevant une information commune de l'un des deux réseaux 300 et 500 la renvoie rapidement à l'autre réseau de manière simple et peu coûteuse sans faire de traitements particuliers de formatage ou d'adressage. De plus, il n'est pas nécessaire de prévoir un noeud supplémentaire entre les deux réseaux 300 et 500. En outre, il n'est pas nécessaire de connecter via un même bus les première et seconde interfaces.

Avantageusement, le réseau primaire 300 est un réseau AFDX et le réseau secondaire 500 est un réseau EREBUS, comme défini ci-après.

Comme déjà mentionné, le réseau AFDX est basé sur un réseau Ethernet commuté et fait appel à la notion de lien virtuel. Un lien virtuel AFDX est caractérisé par un sens de transfert, un équipement source unique, un ou plusieurs équipements destinataires, une bande passante prédéterminée, un temps de latence maximal entre un équipement source et un équipement destinataire quel que soit le comportement du reste du réseau, un chemin figé à travers le réseau, et un identifiant unique.

Le réseau AFDX est full-duplex et déterministe. Il garantit une ségrégation des données et un acheminement de bout en bout dans un temps inférieur au temps de latence maximal.

Le réseau EREBUS est aussi basé sur Ethernet et plus particulièrement, sur une couche physique d'Ethernet.

Le réseau EREBUS est aussi full-duplex, autrement dit, chaque terminal peut simultanément émettre et recevoir des trames.

Plus particulièrement, le réseau EREBUS est basé sur une répétition systématique où les données en provenance d'un terminal source reçues par le répéteur 550 sont envoyées à tous les terminaux abonnés 510, 520, 530, 540 y compris au terminal source qui reçoit aussi les données qu'il a envoyées. En effet, lorsque le répéteur 550 reçoit sur l'un de ses ports d'entrée une trame, cette dernière est répliquée sur tous les ports y compris celui relié au terminal source. Les terminaux abonnés 510, 520, 530, 540 qui la reçoivent déterminent alors s'ils sont destinataires de cette trame. En outre le répéteur 550 scrute tour à tour les ports pour vider les trames émises par les différents terminaux abonnés 510, 520, 530, 540 selon un partage équitable de la bande passante.

Selon un mode de réalisation préféré de l'invention, le réseau EREBUS fait appel à des liens virtuels.

Dans ce cas, le dispositif de répétition 550 et les équipements secondaires 510, 520, 530, 540 sont configurés pour permettre la communication au sein du réseau EREBUS par des liens virtuels EREBUS. Chaque équipement secondaire en recevant depuis le dispositif de répétition 550 des trames d'informations comportant dans leurs entêtes des identificateurs de liens virtuels, ne prend en considération que celles appartenant à des liens virtuels auxquels il est abonné.

Autrement dit, le répéteur 550 envoie les trames d'information à tous les équipements. Ensuite, c'est l'abonné lui-même qui, en recevant toutes les trames d'information, va lire les identificateurs de liens virtuels inclus dans les entêtes des trames pour sélectionner uniquement celles qui sont associées à des liens virtuels qui l'intéressent.

Il est évident que dans ce cas, la passerelle d'interconnexion 700 peut diffuser l'information commune entre les deux réseaux de manière simple en recopiant bit-à-bit les trames d'informations communes en provenance de l'un ou l'autre des deux réseaux.

Selon un autre mode de réalisation de l'invention, le réseau EREBUS fait appel à des trames d'information comportant dans leurs entêtes des labels qui permettent de connaître la nature de l'information contenue dans chaque trame.

Comme précédemment, le répéteur 550 envoie les trames d'information à tous les équipements et c'est l'abonné lui-même qui, en recevant toutes les trames d'information, va lire les labels inclus dans les entêtes des trames pour ne prendre en considération que les trames contenant des informations qui l'intéressent.

Dans ce cas, la passerelle d'interconnexion 700 comporte en outre des moyens pour mettre les labels associés à des trames d'informations communes en provenance du réseau secondaire 500 dans des liens virtuels AFDX appropriés.

L'avantage d'utiliser le réseau EREBUS comme un réseau secondaire est par conséquent dû au fait qu'il est très robuste, adapté pour être utilisé dans le domaine avionique, et présente un format compatible avec le réseau AFDX tout en étant suffisamment dissimilaire pour répondre à une panne générique due au réseau AFDX.

## Revendications

1. Système de communication (100) dans un aéronef comportant un réseau primaire (300) de type AFDX destiné à connecter une pluralité d'équipements primaires (310, 311, 320, 321, 330, 340, 360), lesdits équipements primaires étant physiquement reliés à un dispositif de commutation (351, 352, 353) du réseau primaire qui permet la communication entre tous ces équipements primaires par des liens virtuels, **caractérisé en ce que** le système comporte :
- un réseau secondaire (500) dissemblable dudit réseau primaire (300) tout en ayant le même protocole au niveau trame, ledit réseau secondaire (500) étant destiné à connecter une pluralité d'équipements secondaires (510, 520, 530, 540), lesdits équipements secondaires étant physiquement reliés à un dispositif de répétition (550) du réseau secondaire (500) qui permet la communication entre tous ces équipements secondaires, et
- une passerelle d'interconnexion (700 ; 700a ; 700b ; 700c) entre lesdits réseaux primaire (300) et secondaire (500), destinée à recopier bit-à-bit des trames d'informations communes en provenance de l'un desdits réseaux primaire et secondaire (300, 500) pour les diffuser à travers l'autre desdits réseaux primaire et secondaire (300, 500) afin de faire partager ces informations communes aux deux réseaux (300, 500).

2. Système de communication selon la revendication 1, **caractérisé en ce que** la passerelle d'interconnexion (700 ; 700a ; 700b ; 700c) comporte :
- une première interface (710 ; 710a ; 710b ; 710c) destinée à être reliée au réseau primaire (300) et comprenant des premiers buffers d'entrée et de sortie (711, 712),
- une seconde interface (720 ; 720a ; 720b ; 720c) destinée à être reliée au réseau secondaire (500) et comprenant des seconds buffers d'entrée et de sortie (721, 722),
- des moyens de mémoire (730 ; 730a ; 730b ; 730c) pour stocker une table de configuration (731) d'une liste prédéterminée des identificateurs des liens virtuels correspondant aux informations communes, et
- des moyens de sélection (740 ; 740a ; 740b ; 740c) pour sélectionner et recopier les trames correspondant aux informations communes en fonction des identificateurs de liens virtuels choisis dans la table de configuration (731).

3. Système de communication selon la revendication 2, **caractérisé en ce que** les moyens de mémoire (730a ; 730b) et les moyens de sélection (740a ; 740b) sont compris dans la première interface (710a) et/ou la seconde interface (720b) et **en ce que** les première et seconde interfaces (710a, 720a ; 710b ; 720b) sont connectées entre elles via un bus de connexion (750a ; 750b).

4. Système de communication selon la revendication 2, **caractérisé en ce que** la passerelle d'interconnexion (700c) est une partition au sein d'un calculateur (320) appartenant auxdits équipements primaires, ledit calculateur comportant des moyens de stockage (730c) correspondant auxdits moyens de mémoire, et un processeur (740c) correspondant auxdits moyens de sélection.

5. Système de communication selon la revendication 2, **caractérisé en ce que** la passerelle d'interconnexion (700c) est une partition au sein d'un calculateur secondaire (520) appartenant auxdits équipements secondaires, ledit calculateur comportant des moyens de stockage (730c) correspondant auxdits moyens de mémoire, et un processeur (740c) correspondant auxdits moyens de sélection.

6. Système de communication selon l'une quelconque des revendications précédentes, **caractérisé en ce que** la passerelle d'interconnexion (700 ; 700a ; 700b ; 700c) est reliée au réseau primaire (300) et/ou au réseau secondaire (500) via une liaison (701, 702) en fibre optique.

7. Système de communication selon l'une quelconque des revendications précédentes, **caractérisé en ce que** le réseau primaire (300) est un réseau AFDX et le réseau secondaire (500) est un réseau EREBUS.

8. Système de communication selon la revendication 7, **caractérisé en ce que** le réseau EREBUS fait appel à des liens virtuels, chaque équipement secondaire (510, 520, 530, 540) en recevant depuis le dispositif de répétition (550) des trames d'informations comportant dans leurs entêtes des identificateurs de liens virtuels, ne prend en considération que celles appartenant à des liens virtuels auxquels il est abonné.

9. Système de communication selon la revendication 7, **caractérisé en ce que** le réseau EREBUS fait appel à des trames d'information comportant dans leurs entêtes des labels qui permettent de connaître la nature de l'information de chaque trame, chaque équipement secondaire (510, 520, 530, 540) en recevant depuis le dispositif de répétition (550) des trames d'informations comportant des labels, ne prend en considération que celles contenant des informations qui l'intéressent.

10. Système de communication selon l'une quelconque des revendications précédentes, **caractérisé en ce que** les informations communes aux deux réseaux comportent : des données de maintenance, des données horaires, des mises à jour de logiciels, et des données opérationnelles.

11. Aéronef, **caractérisé en ce qu'**il comprend un système de communication (100) selon l'une quelconque des revendications précédentes.

## Patentansprüche

1. Kommunikationssystem (100) in einem Luftfahrzeug, umfassend ein Primärnetz (300) vom Typ AFDX, das dazu ausgelegt ist, eine Mehrzahl von Primärgeräten (310, 311, 320, 321, 330, 340, 360) anzuschließen, wobei die Primärgeräte physisch mit einer Schaltvorrichtung (351, 352, 353) des Primärnetzes verbunden sind, die die Kommunikation zwischen all diesen Primärgeräten durch virtuelle Verbindungen ermöglicht, **dadurch gekennzeichnet, dass** das System umfaßt:
- ein Sekundärnetz (500), welches von dem Primärnetz (300) verschieden ist, jedoch das gleiche Frameprotokoll besitzt, wobei das Sekundärnetz (500) dazu ausgelegt ist, eine Mehrzahl von Sekundärgeräten (510, 520, 530, 540) anzuschließen, wobei die Sekundärgeräte physisch mit einer Wiederholvorrichtung (550) des Sekundärnetzes (500) verbunden sind, die die Kommunikation zwischen all diesen Sekundärgeräten ermöglicht, und
- eine Anschlußschnittstelle (700; 700a; 700b; 700c) zwischen dem Primärnetz (300) und dem Sekundärnetz (500), welche dazu ausgelegt ist, Bit für Bit gemeinsame Informationsframes zu kopieren, die von dem Primär- oder Sekundärnetz (300, 500) stammen, um sie über das andere von dem Primär- und Sekundärnetz (300, 500) mit dem Zweck zu verbreiten, diese gemeinsamen Informationen auf den zwei Netzen (300, 500) zu teilen.

2. Kommunikationssystem nach Anspruch 1, **dadurch gekennzeichnet, dass** die Anschlußschnittstelle (700; 700a; 700b; 700c) umfaßt:
- eine erste Schnittstelle (710; 710a; 710b; 710c), die dazu ausgelegt ist, mit dem Primärnetz (300) verbunden zu sein, und die erste Eingangs- und Ausgangspuffer (711, 712) umfaßt,
- eine zweite Schnittstelle (720; 720a; 720b; 720c), die dazu ausgelegt ist, mit dem Sekundärnetz (500) verbunden zu sein und die zweite Eingangs- und Ausgangspuffer (721, 722) umfaßt,
- Speichermittel (730; 730a; 730b; 730c) zum Speichern einer Konfigurationstabelle (731) einer vorbestimmten Liste von Identifikatoren der virtuellen Verbindungen entsprechend den gemeinsamen Informationen, und
- Auswahlmittel (740; 740a; 740b; 740c) zum Auswählen und Kopieren der Frames entsprechend den gemeinsamen Informationen als Funktion der Identifikatoren von virtuellen Verbindungen, die in der Konfigurationstabelle (731) ausgewählt sind.

3. Kommunikationssystem nach Anspruch 2, **dadurch gekennzeichnet, dass** die Speichermittel (730a; 730b) und die Auswahlmittel (740a; 740b) in der ersten Schnittstelle (710a) und/oder der zweiten Schnittstelle (720b) enthalten sind, und dass die erste und die zweite Schnittstelle (710a, 720a; 710b; 720b) mittels eines Anschlußbus (750a; 750b) miteinander verbunden sind.

4. Kommunikationssystem nach Anspruch 2, **dadurch gekennzeichnet, dass** die Anschlußschnittstelle (700c) eine Partition in einem Rechner (320) ist, der zu den Primärgeräten gehört, wobei der Rechner Aufbewahrungsmittel (730c) umfaßt, die den Speichermitteln entsprechen, sowie einen Prozessor (740c), der den Auswahlmitteln entspricht.

5. Kommunikationssystem nach Anspruch 2, **dadurch gekennzeichnet, dass** die Anschlußschnittstelle (700c) eine Partition in einem Sekundärrechner (520) ist, der zu den Sekundärgeräten gehört, wobei der Rechner Aufbewahrungsmittel (730c) umfaßt, die den Speichermitteln entsprechen, sowie einen Prozessor (740c), der den Auswahlmitteln entspricht.

6. Kommunikationssystem nach einem der vorhergehenden Ansprüche, **dadurch gekennzeichnet, dass** die Anschlußschnittstelle (700; 700a; 700b; 700c) mit dem Primärnetz (300) und/oder dem Sekundärnetz (500) mittels einer Optikfaserverbindung (701, 702) verbunden ist.

7. Kommunikationssystem nach einem der vorhergehenden Ansprüche, **dadurch gekennzeichnet, dass** das Primärnetz (300) ein AFDX-Netz ist, und das Sekundärnetz (500) ein EREBUS-Netz ist.

8. Kommunikationssystem nach Anspruch 7, **dadurch gekennzeichnet, dass** das EREBUS-Netz virtuelle Verbindungen verwendet, wobei jedes Sekundärgerät (501, 520, 530, 540), das von der Wiederholvorrichtung (550) Informationsframes empfängt, die in ihren Köpfen Identifikatoren von virtuellen Verbindungen umfassen, nur diejenigen berücksichtigt, die zu virtuellen Verbindungen gehören, auf die es abonniert ist.

9. Kommunikationssystem nach Anspruch 7, **dadurch gekennzeichnet, dass** das EREBUS-Netz Informationsframes verwendet, die in ihren Köpfen Label umfassen, welche es ermöglichen, die Art der Information jedes Frames zu kennen, wobei jedes Sekundärgerät (510, 520, 530, 540), das von der Wiederholvorrichtung (550) Informationsframes empfängt, die Label umfassen, nur diejenigen berücksichtigt, die Informationen enthalten, welche es interessieren.

10. Kommunikationssystem nach einem der vorhergehenden Ansprüche, **dadurch gekennzeichnet, dass** die den zwei Netzen gemeinsamen Informationen umfassen: Wartungsdaten, Zeitdaten, Softwareupdates und Operationsdaten.

11. Luftfahrzeug, **dadurch gekennzeichnet, dass** es ein Kommunikationssystem (100) nach einem der vorhergehenden Ansprüche umfaßt.

## Claims

1. Aircraft communication system (100) comprising a primary network (300) of AFDX type intended to connect a plurality of primary equipment items (310, 311, 320, 321, 330, 340, 360), said primary equipment being physically connected to a switching device (351, 352, 353) of the primary network which allows communication between all these primary equipment items via virtual links, **characterized in that** the system comprises:
- a secondary network (500) dissimilar from said primary network (300) whilst having the same protocol at frame level, said secondary network (500) being intended to connect a plurality of secondary equipment items (510, 520, 530, 540), said secondary equipment being connected to a hub (550) of the secondary network (500) which allows communication between all these secondary equipment items, and
- an interconnection gateway (700; 700a; 700b; 700c) between said primary (300) and secondary (500) networks, intended to copy common data frames bit-by-bit originating from one of said primary and secondary networks (300, 500) for their distribution through the other of said primary and secondary networks (300, 500), to have this common data shared by the two networks (300, 500).

2. The communication system according to claim 1, **characterized in that** the interconnection gateway (700; 700a; 700b; 700c) comprises:
- a first interface (710; 710a; 710b; 710c) intended to be connected to the primary network (300) and comprising first incoming and outgoing buffers (711, 712),
- a second interface (720; 720a; 720b; 720c) intended to be connected to the secondary network (500) and comprising second incoming and outgoing buffers (721, 722),
- memory means (730; 730a; 730b; 730c) to store a configuration table (731) of a predetermined list of virtual link identifiers corresponding to common data, and
- selection means (740; 740a; 740b; 740c) to select and copy frames corresponding to common data in relation to the virtual link identifiers chosen in the configuration table (731).

3. The communication system according to claim 2, **characterized in that** the memory means (730a; 730b) and the selection means (740a; 740b) are included in the first interface (710a) and/or the second interface (720b), and **in that** the first and second interfaces (710a, 720a; 710b; 720b) are connected together via a connection bus (750a; 750b).

4. The communication system according to claim 2, **characterized in that** the interconnection gateway (700c) is a partition in a computer (320) belonging to said primary equipment, said computer comprising storage means (730c) corresponding to said memory means, and a processor (740c) corresponding to said selection means.

5. The communication system according to claim 2, **characterized in that** the interconnection gateway (700c) is a partition in a secondary computer (520) belonging to said secondary equipment, said computer comprising storage means (730c) corresponding to said memory means, and a processor (740c) corresponding to said selection means.

6. The communication system according to anyone of preceding claims, **characterized in that** the interconnection gateway (700; 700a; 700b; 700c) is connected to the primary network (300) and/or the secondary network (500) via an optical fibre link (701, 702).

7. The communication system according to anyone of preceding claims, **characterized in that** the primary network (300) is an AFDX network and the secondary network (500) is an EREBUS network.

8. The communication system according to claim 7, **characterized in that** the EREBUS network has recourse to virtual links and each item of secondary equipment (510, 520, 530, 540), on receiving data frames from the hub (550) which contain virtual link identifiers in their headers, only takes into consideration those belonging to virtual links to which it is subscribed.

9. The communication system according to claim 7, **characterized in that** the EREBUS network has recourse to data frames comprising labels in their headers giving information on the type of data in each frame, and each item of secondary equipment (510, 520, 530, 540) on receiving data frames containing labels from the hub (550) only takes into consideration those containing data of interest to it.

10. The communication system according to anyone of preceding claims, **characterized in that** the data common to the two networks comprises: maintenance data, time-stamping data, software updates, and operational data.

11. Aircraft, **characterized in that** it comprises a communication system (100) according to anyone of preceding claims.
